# EUROPEAN PATENT SPECIFICATION

(11) **EP 2 898 351 B1**
(45) Date of publication and mention of the grant of the patent: **30.11.2016**
(21) Application number: 13808213.6
(22) Date of filing: 20.09.2013
(51) Int. Cl.: G01V 1/38, G01V 1/00, E02D 27/52

(54) **METHOD AND APPARATUS FOR SHIELDING UNDERWATER NOISE**
VERFAHREN UND VORRICHTUNG ZUR ABSCHIRMUNG VON UNTERWASSERGERÄUSCHEN
PROCÉDÉ ET APPAREIL DE PROTECTION CONTRE LES BRUITS SOUS-MARINS

(30) Priority: 21.09.2012 NO 20121076
(43) Date of publication of application: 29.07.2015
(73) Proprietor: Mobico Shipping AS, 3113 Tønsberg (NO)
(72) Inventor: NEUMANN, Petter, N-3113 Tønsberg (NO)
(74) Representative: Onsagers AS
(86) International application number: PCT/IB2013/058689
(87) International publication number: WO 2014/045231

(56) References cited:
- EP-A1- 2 431 531
- DE-A1-102004 043 128
- US-B2- 8 162 297

## Description

The present invention relates to a method for shielding underwater noise in a body of water, for example, underwater noise that is generated during underwater blasting, seismic surveys or the preparation and foundation work for offshore structures.

The present invention also relates to equipment used to carry out the method.

Different offshore operations that require blasting, piling, foundation work etc., will generate underwater noise, for example, pressure and/or sound waves, that may be harmful to marine flora and fauna. In the light of this, new regulations have been introduced which require such underwater noise to be insulated.

It is known to provide so-called air bubble curtains around parts of an offshore structure, for example, the legs of a platform, when different operations are to be carried out. An air bubble curtain of this kind is formed of small air bubbles that flow out from a plurality of nozzles in an apparatus deployed at a depth in the water, which air bubbles, as they rise to the surface, will expand and thus form a curtain of air that will prevent underwater noise from "escaping" through the air bubble curtain.

Such known solutions are based on a special "cage" being made for the specific offshore structure, where this cage is then, for example, built around the legs of a platform before the planned work is started. The cage will be arranged close to the platform legs. This is a time-consuming and costly method and, moreover, it will not always work as intended, as the air bubbles forming the curtain of air will be affected by waves and currents in the water, which may result in the air bubbles crossing the platform legs and ending up on the other side of the leg from their point of release, which results in the underwater noise propagating in the body of water and thereby harming marine flora and fauna.

EP 2,431,531 A1 relates to a jack-up vessel that is used in connection with offshore piling activities, where an air bubble curtain is provided to shield noise that is generated during the piling process. A flexible conduit configured with a plurality of holes along its length will be laid in a circle around a pile that is to be driven into the seabed. The vessel is provided with equipment so as to be able to supply the flexible conduit with air.

US 4,038,630 A relates to a method and apparatus for simultaneously towing and handling multiple airguns that are used in connection with seismic surveying offshore.

An object of the present invention is to minimise and possibly alleviate the problems associated with the prior art. It is also an object to provide an apparatus that will facilitate deployment of the apparatus.

These objects are achieved in accordance with the invention by the features disclosed in the independent claims below, with additional features of the invention set forth in the dependent claims and the following description.

The present invention, in one embodiment, relates to a method for laying out a plurality of flexible conduits around an area in which one or multiple offshore structures are to be deployed on the seabed, each flexible conduit being used to delimit a given area with an air bubble curtain, such that underwater noise which, for instance, is generated in connection with the deployment and anchoring of an offshore structure foundation on the seabed, is stopped by the air bubble curtain. The air bubble curtain is provided in that small air bubbles flow out from a plurality of nozzles provided in the flexible conduit when the flexible conduit is connected to one or more compressed air sources and compressed air is supplied to the flexible conduit. According to the method of the present invention, a plurality of flexible conduits are towed behind a vessel in full length to an area in which the offshore structure or structures are to be deployed. Such offshore structures may, for example, be wind power plants. Once the vessel has towed the plurality of flexible conduits into the vicinity of the area in which the offshore structures are to be deployed, these flexible conduits, with the exception of one, will be made ready for later laying in that the flexible conduits are ballasted and lowered to the seabed in the vicinity of the area in which the offshore structures are to be deployed, and then released from the vessel so as to lie submerged on the seabed. The flexible conduit that is still connected to the vessel will then be towed to the installation site of an offshore structure, after which the vessel tows the flexible conduit in order to lay it in a ring or circle around the location in which the offshore structure is to be installed, whilst the flexible conduit is ballasted in order to lower it to the seabed. When the flexible conduit has been deployed and lowered to the seabed, the flexible conduit will form a closed ring or circle around the location in which the offshore structure is to be deployed. The offshore structure will then be transported to the location in which it is to be deployed and then lowered down in the centre of the ring or circle. How far the flexible conduit is to be arranged from the offshore structure will be determined by the local current conditions, weather conditions, the size of the air bubbles etc. The vessel will then return to the area where the rest of the flexible conduits have been submerged in order to be connected to one of these flexible conduits, after which the vessel will tow this flexible conduit to the next, nearby installation site for another offshore structure. This flexible conduit will then similarly be laid in a closed ring or circle around the location in which the offshore structure is to be deployed. This method is repeated until all towed flexible conduits have been towed out to the installation sites and arranged submerged on the seabed at this location. Each flexible conduit will thus form a closed ring or circle around its respective offshore structure when the offshore structure has been deployed.

Through the method according to the present invention, a plurality of flexible conduits will be laid in one operation, these flexible conduits thereby being ready for later use. In this way, offshore structures can be deployed even in bad weather, which will be cost-saving since otherwise the work would have had to be stopped as laying such flexible conduits is difficult in bad weather.

When a work vessel has transported the foundation of an offshore structure and lowered it into the centre of the laid and submerged flexible conduit, the submerged flexible conduit will be connected to one or more compressed air sources on board the vessel, so as to start supplying compressed air to the flexible conduit. As the flexible conduit is configured with a plurality of nozzles along its length, the compressed air will gradually begin to flow out of the nozzles, said nozzles forming small air bubbles that rise to the sea surface. Since the compressed air is supplied continuously to the flexible conduit, these air bubbles will, as they rise, expand and form a curtain of air that will prevent underwater noise in connection with the work being done to anchor the foundation to the seabed from escaping through and to the outside of the air bubble curtain that is formed by the flexible conduit.

It will be understood that the method according to the present invention can also be used in other connections, for example, to shield underwater noise that is generated in connection with different types of blasting operations (blasting to remove explosives from the seabed, blasting in connection with the installation of an offshore structure etc.) or when conducting seismic surveys.

During seismic surveys, the flexible conduits will not necessarily be submerged on the seabed, but may, for example, be towed with the seismic cable. In this case, a flexible conduit will be arranged on each side of the seismic cable, so as to prevent unwanted underwater noise from affecting the seismic survey, or limit the seismic survey sweep.

The present invention also relates to equipment that is used to carry out the method, the equipment comprising a flexible conduit that is configured with a plurality of nozzles along its length and is further configured with suitable means to enable it to be connected to one or more compressed air sources. In that the flexible conduit is connected to one or more compressed air sources and the compressed air sources supply compressed air to the flexible conduit, the compressed air will be able to flow out of the nozzles so as to form small air bubbles which will expand as they rise towards the surface. These air bubbles will then form a curtain of air bubbles which will prevent underwater noise from escaping through the curtain.

The flexible conduit further comprises a plurality of chambers, where at least one chamber forms a variable ballast chamber, at least one chamber forms an air-conducting chamber and one chamber forms a fixed ballast chamber, which plurality of chambers extend along the entire length of the flexible conduit. The at least one chamber forming the air-conducting chamber will then be configured with the plurality of nozzles.

In an embodiment, the at least one air-conducting chamber of the flexible conduit is configured with two rows of nozzles along the length of the air-conducting chamber, the rows of nozzles being arranged spaced apart. The rows of nozzles are expediently arranged towards a lower part of the air-conducting chamber.

In that the rows of nozzles are configured so as to be spaced apart, one of the rows of nozzles may, for example, be arranged at 4 o'clock, whilst the other row of nozzles may be arranged at 8 o'clock. The rows of nozzles will thus provide an air bubble curtain on each side of the air-conducting chamber, whereby this will further prevent underwater noise from passing through the double bubble curtain.

In an embodiment, the nozzles in one row are offset in the longitudinal direction of the air-conducting chambers relative to the nozzles in the other row, thereby forming a double bubble curtain.

The at least one chamber forming the variable ballast chamber, the at least one chamber forming the air-conducting chamber and the fixed ballast chamber will be connected to each other through intermediate elements so as to form a "closed" unit, the intermediate elements extending in the whole of the longitudinal direction of the flexible conduit.

In an embodiment, the flexible conduit is configured with five chambers, of which two form variable ballast chambers, two form air-conducting chambers and one forms a fixed ballast chamber. The five chambers will, in a way similar to that described above, be connected to each other by means of intermediate elements. This embodiment will also result in that the flexible conduit will be more flexible for bending horizontally and vertically than in the intermediate diagonal planes in that the bending moment between the chambers is smaller in the horizontal and vertical directions than in the diagonal direction, which results in the flexible conduit assuming a correct horizontal orientation on the seabed.

The fixed ballast chamber in the embodiments referred to above is configured with a through opening along the entire length of the fixed ballast chamber, in which through opening is arranged a weight in the form of chain, wire, cement or the like. The air-conducting chamber or chambers will furthermore be arranged essentially in the same plane as the fixed ballast chamber.

The centre of gravity of this fixed ballast chamber is expediently arranged lower than the centre of buoyancy of the flexible conduit, such that the flexible conduit has a positive GZ curve (righting arm), which means that the flexible conduit will always float with the fixed ballast chamber lowermost and will lie with the fixed ballast chamber on the seabed, so as to assume a correct position with regard to forming a double bubble curtain.

Furthermore, the flexible conduit will be so configured that it is more flexible for bending horizontally and vertically than in the intermediate diagonal planes in that the bending moment between the chambers of the flexible conduit is smaller in the horizontal and vertical directions than in the diagonal direction. The flexible conduit will thus not twist around its own axis on bending (i.e., when the flexible conduit is laid in a circle), whereby the configuration of the flexible conduit, together with the position of the fixed ballast chamber, will always ensure that the flexible conduit assumes a correct horizontal orientation when it is submerged on the seabed.

When the flexible conduit has been laid in a ring or circle, the length of the outer air-conducting chamber will be longer than the length of the inner air-conducting chamber. The flexible conduit will thus be configured such that the inner air-conducting chamber over certain areas of the flexible conduit is allowed to buckle so as to take up the difference in length to the outer air-conducting chamber.

The flexible conduits can be lowered and raised first from an end that is closest to the vessel, or lowered and raised first from an end that is furthest from the vessel.

In the first case, the flexible conduits will be lowered by pumping water into the variable ballast chambers from the end of the flexible conduit that is closest to the vessel, whereby the flexible conduit starts to be lowered from the vessel from this side and then along its length. When a flexible conduit is to be raised from the seabed, air will be blown into the variable ballast chambers from the end of the flexible conduit that is closest to the vessel. As the flexible conduit at an opposite end is equipped with one or more pressure-controlled valves, the water will begin to flow out of the variable ballast chambers when the pressure in the variable ballast chambers exceeds the opening pressure of the pressure-controlled valves and the variable ballast chambers will then be filled with air. The flexible conduit will then begin to rise from the end that is closest to the vessel.

In the second case, a fluid connection is formed between the variable ballast chambers and the air-conducting chambers in the flexible conduit, a one-way valve being arranged in this fluid connection. When a valve is opened at the end of the flexible conduit closest to the vessel and at the same time water is pumped into the air-conducting chambers, the water will flow into the variable ballast chambers through the fluid connection and the one-way valve, whereby the flexible conduit begins to fill with water at the end thereof furthest from the vessel. The flexible conduit will then begin to sink from the end that is furthest from the vessel. To get the flexible conduit to rise at the end furthest from the vessel, air will be pumped into the air-conducting chambers, whilst a valve is opened in the variable ballast chambers at the end that is closest to the vessel. The air will then flow through the fluid connection and the one-way valve and up into the variable ballast chambers and the water is then forced out at the end that is closest to the vessel, thereby causing the flexible conduit to start to rise from the end that is furthest away from the vessel.

Additional objects, structural embodiments and advantages of the present invention will be seen clearly from the following detailed description, the attached figures and the claims below.

The present invention will now be described with reference to the attached figures, wherein
Figure 1 shows how a plurality of flexible conduits are towed behind a vessel to a destination;
Figure 2 shows in greater detail how the plurality of flexible conduits are connected to the vessel;
Figure 3 shows the submerging of the plurality of flexible conduits, with the exception of one flexible conduit that is still connected to the vessel;
Figure 4 shows how the remaining flexible conduit that is connected to the vessel is towed to be laid out at the desired destination;
Figures 5A and 5B show how a flexible conduit is laid out and at the same time ballasted.
Figure 6 shows how the flexible conduit is laid out to shield underwater noise in connection with the preparation and foundation work for an offshore structure;
Figure 7 shows a flexible conduit that is connected to a plurality of compressed air sources on the vessel;
Figure 8 shows how an air bubble curtain begins to be formed around an offshore structure;
Figures 9A-9C show embodiments of the flexible conduit;
Figures 10 and 11 show details of the flexible conduit, in side view and in top view; and
Figure 12 shows how a double bubble curtain shields underwater noise in a body of water around an offshore structure.

In connection with the deployment of a plurality of offshore structures on a seabed H, a method and equipment for carrying out the method according to the present invention are used to shield underwater noise that is generated in connection with the preparation and groundwork for the foundations 3 of offshore structures on the seabed H.

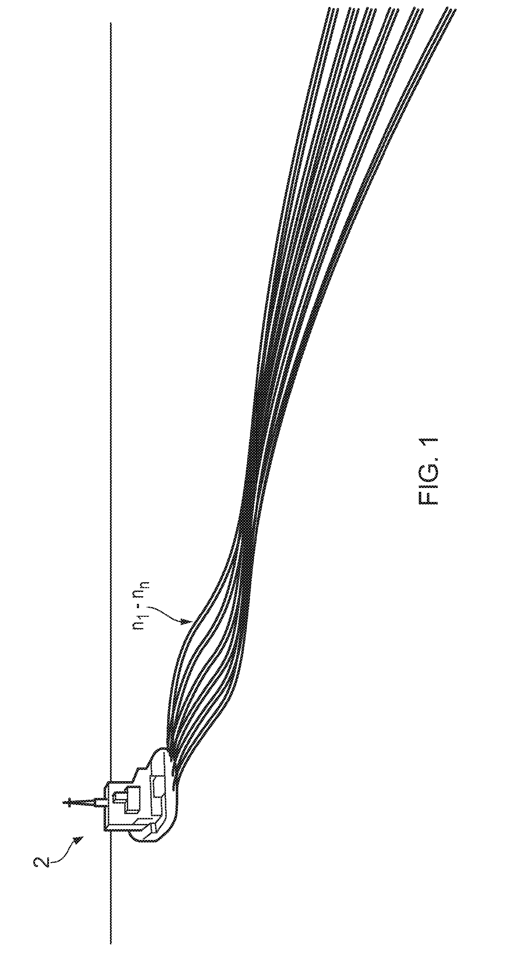

Figure 1 shows how a plurality of flexible conduits n₁-nₙ are towed behind a vessel 2 in their full length to a destination where the foundations 3 of a plurality of offshore structures are to be deployed, so as to lay out the flexible conduits n₁-nₙ in a radius from the location in which the foundation 3 of the offshore structure is to be deployed.

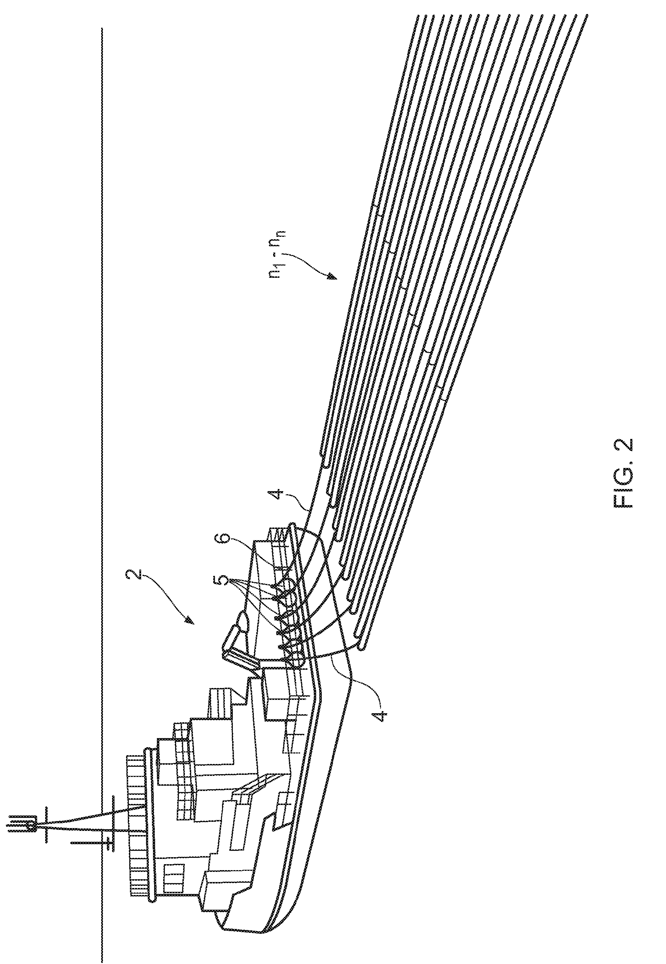

In Figure 2 it is shown that each of the flexible conduits n₁-nₙ at one end, through a chain, wire 4 or the like, is connected to a floating surface buoy 5, which floating surface buoys 5 are used to facilitate the retrieval of the submerged flexible conduits n₁-nₙ, or during the connection of the flexible conduit n₁-nₙ to one or more compressed air sources. The floating surface buoy 5 will then be fished up allowing the flexible conduit n₁-nₙ to be connected to the vessel 2 by means of the chain, wire 4 etc., or connected to one or more compressed air sources 9. It will however be understood that the flexible conduits n₁-nₙ can also be towed behind the vessel 2 simply by being connected to the vessel 2 with chains, wires 4 or the like.

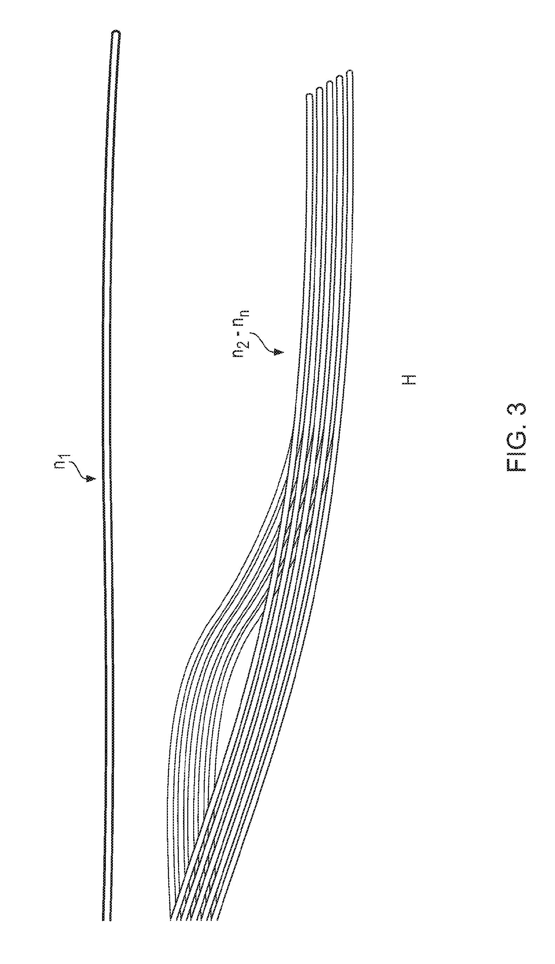

When the vessel 2 has arrived at the location in which the foundations 3 of the offshore structures are to be placed, the flexible conduits n₂-nₙ, with the exception of one flexible conduit n₁, will at an opposite end of the connection to the floating surface buoy 5 be connected to one or more pumps in order thereafter to be ballasted with water. This is shown in Figure 3, where the flexible conduits n₂-nₙ are shown partly submerged on the seabed H. Once the flexible conduits n₂-nₙ have been completely filled with water, these conduits n₂-nₙ will be released from the vessel 2 in that the floating surface buoy 5 of each of the submerged flexible conduits n₂-nₙ are removed from the buoy holder in the stern of the vessel 2 and then thrown overboard. The flexible conduits n₂-nₙ will now lie ready on the seabed H until they are to be used.

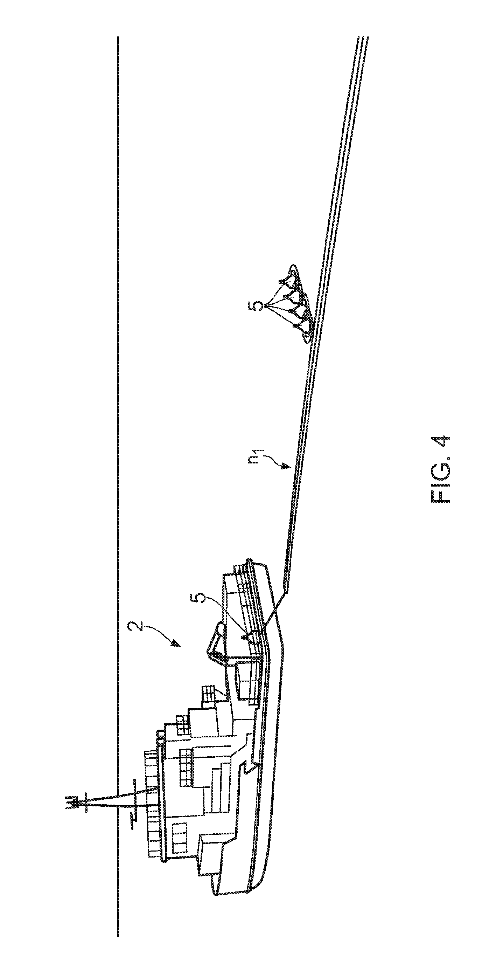

Figure 4 shows that a flexible conduit n₁ is still connected to the vessel 2, whereby the vessel 2 will now tow the flexible conduit n₁ to an area in which the foundation 3 of an offshore structure is to stand, in order to lay out the flexible conduit n₁ in a ring or circle around the foundation 3. The four other flexible conduits n₂-nₙ,which were also towed by the vessel 2 to the destination, are submerged on the seabed H and disconnected from the vessel 2, whereby these flexible conduits n₂-nₙ may now lie on the seabed H until they too are to be laid. The vessel 2 will then be able to fetch the flexible conduits n₂-nₙ one by one, a flexible conduit n₂-nₙ being connected to the vessel 2 by picking up the floating surface buoy 5 and arranging it in the buoy holder in the stern of the vessel 2.

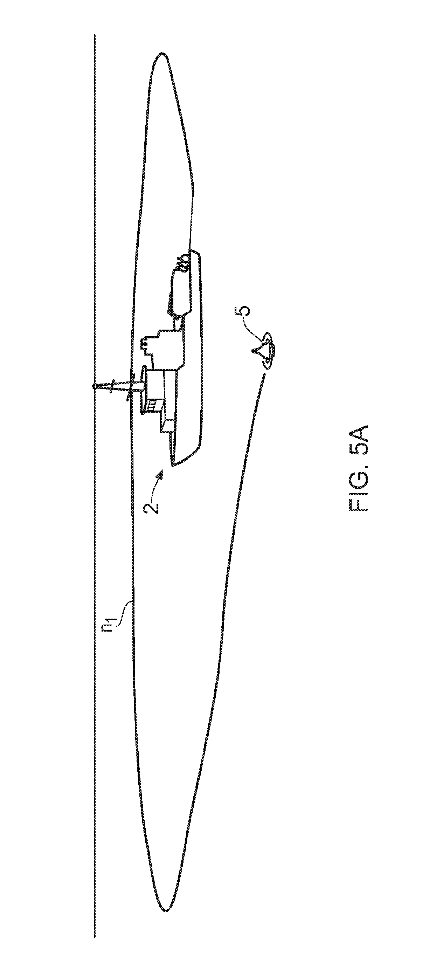

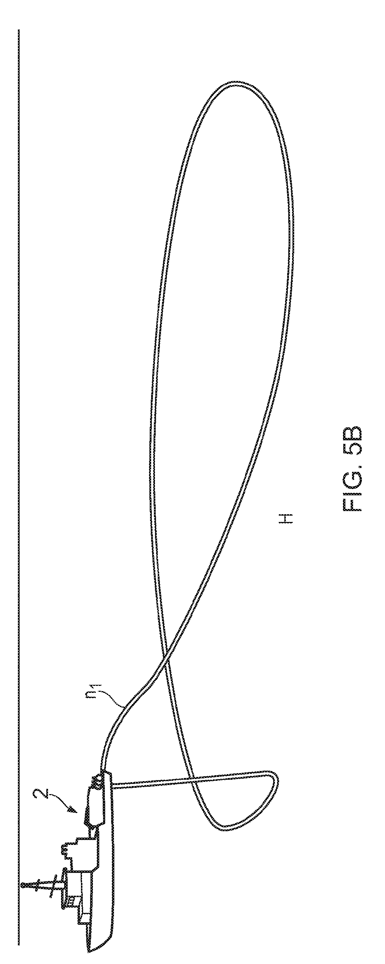

Figure 5A shows how a flexible conduit n₁ is laid in a ring or circle and at a distance from a point or centre where the foundation 3 of the offshore structure is to be arranged, whilst Figure 5B shows how the flexible conduit n₁ is ballasted with water to lower the flexible conduit n₁ onto the seabed H.

Once the flexible conduit n₁ has been laid out on the seabed H as shown in Figure 5B, the vessel 2 will return to the submerged flexible conduits n₂-nₙ to pick up one of them, after which the vessel 2 will tow this flexible conduit n₂-nₙ to another location in which the foundation 3 of an offshore structure is to stand, in order, in turn, to lay out this flexible conduit n₂-nₙ as described above for the flexible conduit n₁. This method will be repeated until all the flexible conduits n₁-nₙ have been laid out.

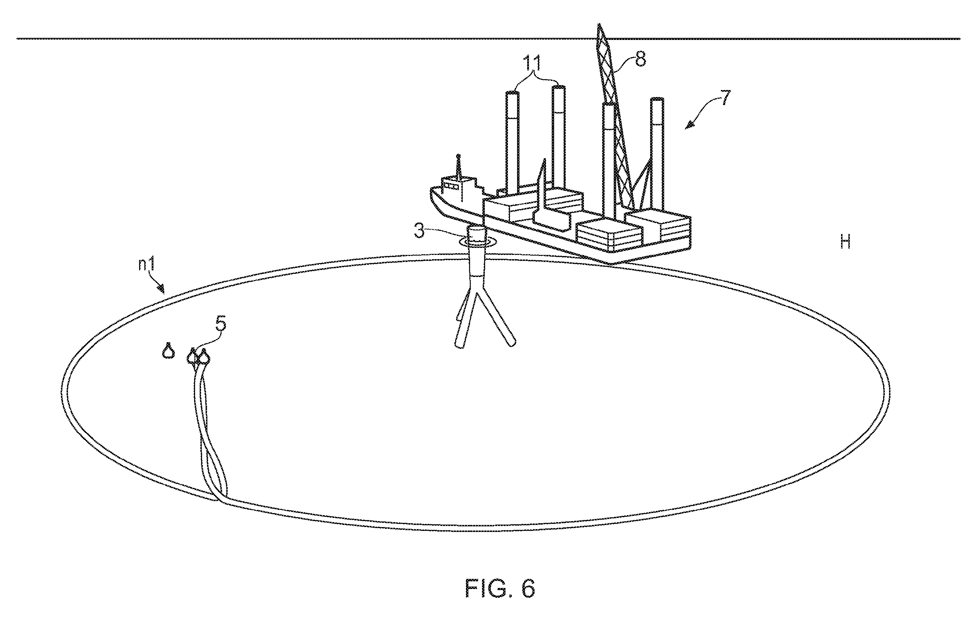

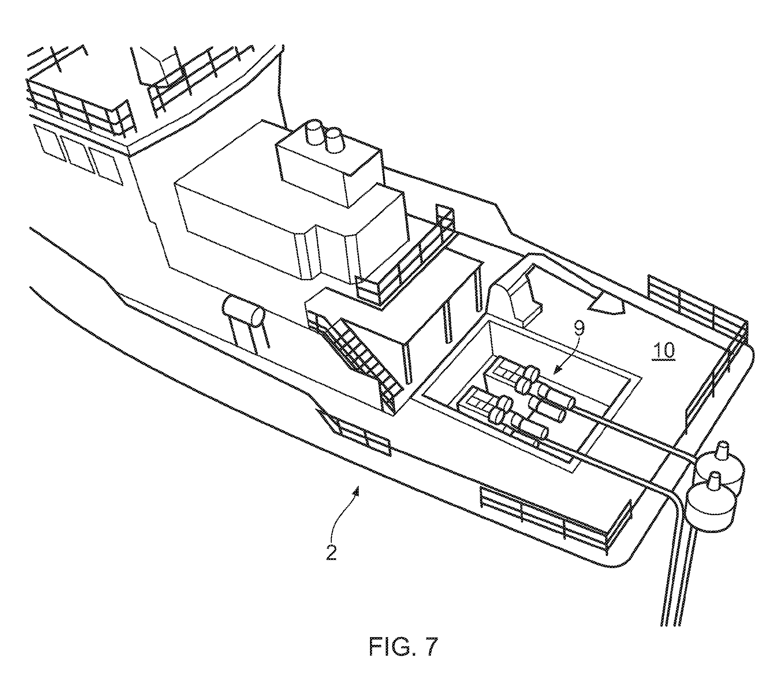

In Figure 6 it is shown that a work vessel 7, with the aid of cranes 8, has transported the foundation 3 of an offshore structure to the location in which the foundation 3 is to be positioned on the seabed H and has placed the foundation 3 on the seabed H. The flexible conduit n₁ has at this time already been laid out on the seabed H, and will be so arranged that it forms a completely closed ring or circle around the foundation 3. Before the work of fixing the foundation 3 to the seabed H starts, the vessel 2 will go alongside the floating surface buoys 5 and then connect to the flexible conduit n₁ through a compressed air device 9, see also Figure 7. The compressed air device 9 may, for example, consist of a plurality of compressors or the like, these being arranged in a recess or hold in the vessel 2, so as to free up space on the vessel's 2 deck 10.

A person of skill in the art will understand what compressed air device or devices 9 are to be used and how they shall be arranged, and therefore this is not described in detail herein.

The way in which the flexible conduit is lowered will be described in more detail: the flexible conduit is lowered in that water is pumped into the variable ballast chambers 12 from the end of the flexible conduit that is closest to the vessel, whereby the flexible conduit starts to be lowered from the vessel and then along its whole length. When a flexible conduit is to be raised from the seabed, air will be blown into the variable ballast chambers 12 from the end of the flexible conduit that is closest to the vessel. As the flexible conduit, at an opposite end, is equipped with one or more pressure-controlled valves (not shown), the water will begin to flow out of the variable ballast chambers 12 when the pressure in the variable ballast chambers 12 exceeds the opening pressure of the pressure-controlled valves, and the variable ballast chambers 12 will then be filled with air. The flexible conduit will then begin to rise from the end that is closest to the vessel.

In an embodiment, the flexible conduit may also begin to be lowered from the end that is furthest from the vessel. In this case, there will be a fluid connection between the variable ballast chambers 12 and the air-conducting chambers 13, a one-way valve being arranged in this fluid connection. When a valve is opened at the end of the flexible conduit that is closest to the vessel and at the same time water is pumped into the air-conducting chambers, the water will flow into the variable ballast chambers 12 through the fluid connection and the one-way valve, whereby the flexible conduit starts to be filled with water at the end of the flexible conduit that is furthest from the vessel. The flexible conduit will then start to sink from the end that is furthest from the vessel. There will be some loss of water through nozzles 17 in the air-conducting chambers 12 when water is pumped in, but as the nozzles 17 are dimensioned for releasing air and not water, the loss will be limited. In order to get the flexible conduit to rise as the end that is furthest from the vessel, air will be pumped into the air-conducting chambers 13, whilst a valve is opened in the variable ballast chambers 12 at the end that is closest to the vessel. The air will then flow through the fluid connection and the one-way valve and up into the variable ballast chambers 12 and water is then forced out at the end that is closest to the vessel, thereby causing the flexible conduit to begin to rise from the end that is furthest from the vessel.

Before the work of fixing the foundation 3 to the seabed H commences, the compressed air device 9 is started in order to begin supplying air to the flexible conduit n₁. After some time, any water that is in the flexible conduit n₁-nₙ will have been displaced by the compressed air supplied, whereafter small air bubbles will begin to flow out of a plurality of nozzles 17 that are arranged in the flexible conduit n₁-nₙ.

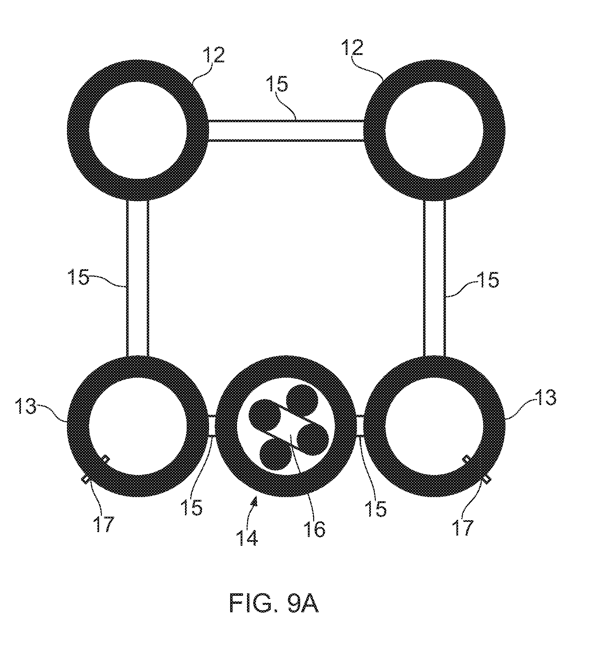

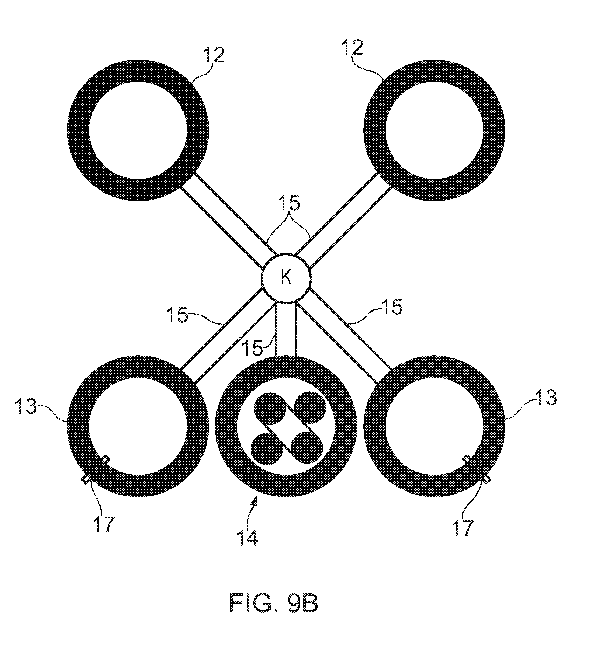

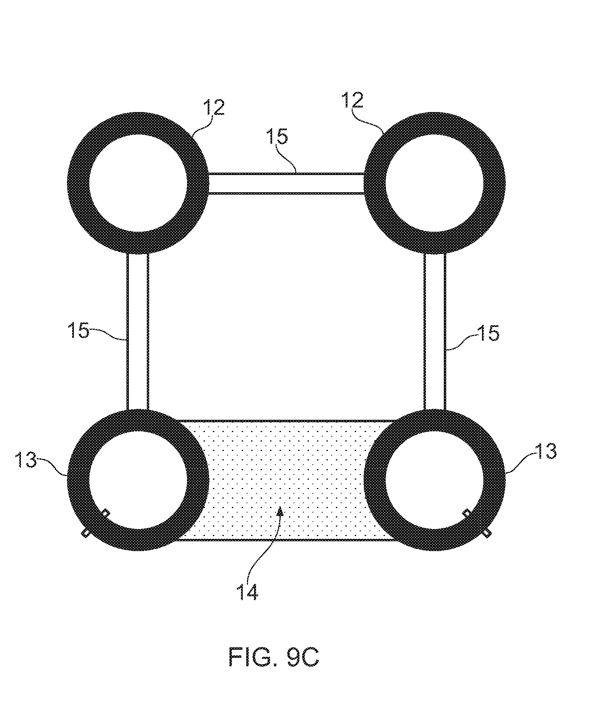

The configuration and function of the flexible conduit n₁-nₙ will be described in more detail with reference to Figures 9 to 11.

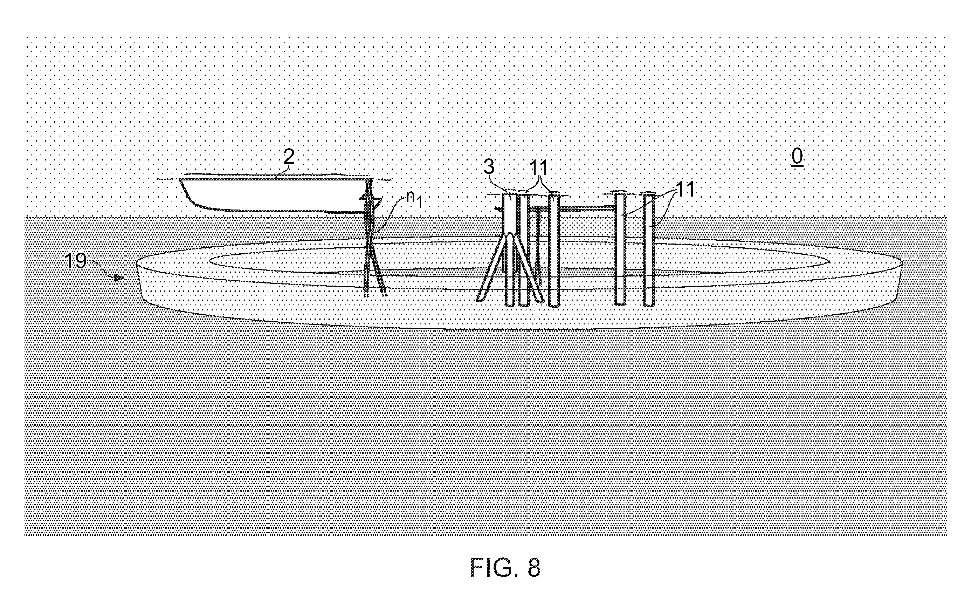

In Figure 8 it can be seen that the work vessel 8, such as, for example, a jack-up rig, has lowered its legs 11 to the seabed H and has then been lifted up above the water surface O, so as not to be affected by waves and wind during the work of securing the foundation 3. It is further seen that water that has been present in the flexible conduit n₁ has been displaced out of the flexible conduit n₁, after which air in the form of small bubbles has started to flow out of the flexible conduit n₁. These small bubbles will rise up towards the water surface O so as to form an air bubble curtain 19 around the foundation 3 of the offshore structure. Only after the small bubbles have formed an air bubble curtain 19 between the seabed H and the water surface O can the work vessel 8 begin the work of anchoring the foundation 3 to the seabed H. This work may comprise blasting, driving a plurality of piles (not shown) into the seabed H and the like, where during this work noise will be generated that is harmful to the marine life in the body of water. The air bubble curtain 19 that is formed around the foundation 3 of the offshore structure will, however, "shut" this noise inside the air bubble curtain 19, whereby an extremely limited amount of noise will escape out through the air bubble curtain 19.

Figures 9A-9C show different embodiments of a flexible conduit n₁-nₙ which is used in the method described above for laying out flexible conduits and shielding underwater noise in a body of water.

Figure 9A shows a cross-section of a flexible conduit n₁-nₙ, where the flexible conduit n₁-nₙ comprises five chambers that extend in the longitudinal direction of the flexible conduit n₁-nₙ, two of the chambers forming variable ballast chambers 12, two forming air-conducting chambers 13 and the last chamber forming a fixed ballast chamber 14 in the flexible conduit n₁-nₙ. The five chambers 12, 13, 14 are connected to each other through intermediate elements 15, such that a "closed" unit is formed. The intermediate elements 15 will be such that they extend in the whole of the longitudinal direction of the flexible conduit n₁-nₙ.

The flexible conduit n₁-nₙ, in an embodiment, is made as an integral, extruded element, but it will be appreciated that the chambers 12, 13, 14 and the intermediate elements 15 can be manufactured as separate elements, after which these elements are in a suitable manner connected to each other so as, together, to form the flexible conduit n₁-nₙ.

The fixed ballast chamber 14 is configured with a through opening that extends along the entire length of the fixed ballast chamber 14, so as to form the fixed ballast chamber 14 in the flexible conduit n₁-nₙ.

A weight, for example, in the form of a chain 16 will then be provided through the through opening. Once the flexible conduit n₁-nₙ has been made, a thin rope or the like will be passed through the through opening so as to be able to pull a thicker rope therethrough, after which this thicker rope is then connected to the chain 16 in order to pull the chain 16 through the through opening in the fixed ballast chamber 14.

It will, however, be understood that the fixed ballast chamber 14 can also be filled with sand, cement or the like in order to obtain a weight in the flexible conduit n₁-nₙ.

The flexible conduit n₁-nₙ is further configured with a plurality of nozzles 17 along its length, these nozzles 17 being provided in each of the air-conducting chambers 13. The nozzles 17 in one of the air-conducting chambers 13 are arranged at 4 o'clock, whilst the nozzles 17 in the other air-conducting chamber 13 are arranged at 8 o'clock. The nozzles 17 will furthermore be inclined such that a horizontal spreading of the air bubbles that flow out of the nozzles 17 is achieved when the flexible conduit n₁-nₙ is connected to one or more compressed air sources.

The diameter of the nozzles 17 and the spacing between the nozzles 17 will depend on a number of parameters, such as pressure applied to the air that is to be supplied to the flexible conduit n₁-nₙ, the depth at which the flexible conduit n₁-nₙ is to be deployed, how substantial the underwater noise is etc. A person of skill in the art will know how this is to be done and therefore a further description is not provided herein.

Figure 9B shows another embodiment of the flexible conduit n₁-nₙ, where it is seen that the intermediate elements 15 run out from a common junction K, so as to connect the five chambers 12, 13, 14. The embodiment will otherwise be as described in connection with Figure 9A.

Figure 9C shows yet another embodiment of the flexible conduit n₁-nₙ, where it is seen that the two air-conducting chambers 13 are connected through a weight 14, such as a concrete element or the like.

In the embodiments described, the flexible conduit will be configured such that it is more flexible for bending horizontally and vertically than in the intermediate diagonal planes in that the bending moment between the chambers of the flexible conduit is smaller in the horizontal and vertical directions than in the diagonal direction. The flexible conduit will thus not twist around its own axis on bending (i.e., when the flexible conduit is laid in a circle), whereby the configuration of the flexible conduit, together with the position of the fixed ballast chamber 14, will always ensure that the flexible conduit assumes a correct horizontal orientation when it is lowered onto the seabed.

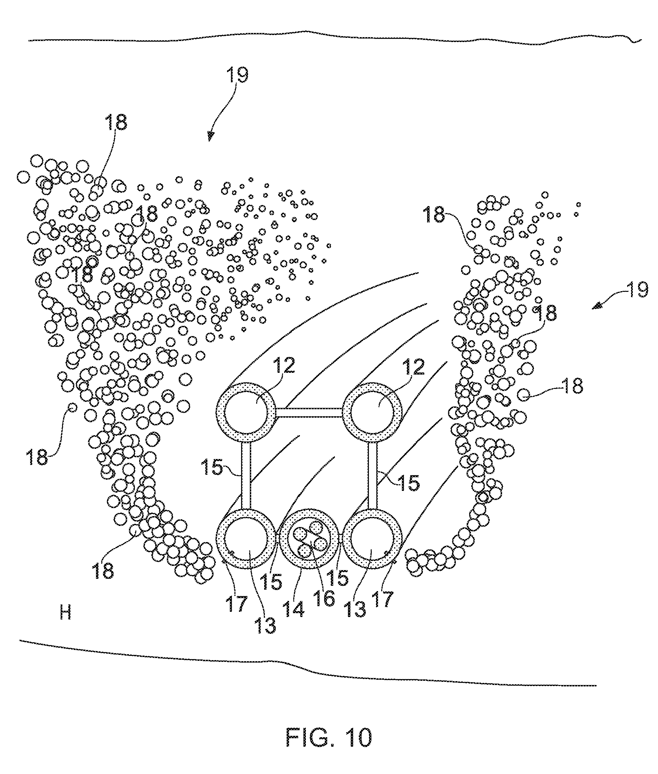

Figure 10 is a cross-section of a flexible conduit n₁-nₙ that is arranged on the seabed H and shows how small air bubbles 18 flow out of the nozzles 17 so as to provide an air bubble curtain 19 on each side of the flexible conduit n₁-nₙ.

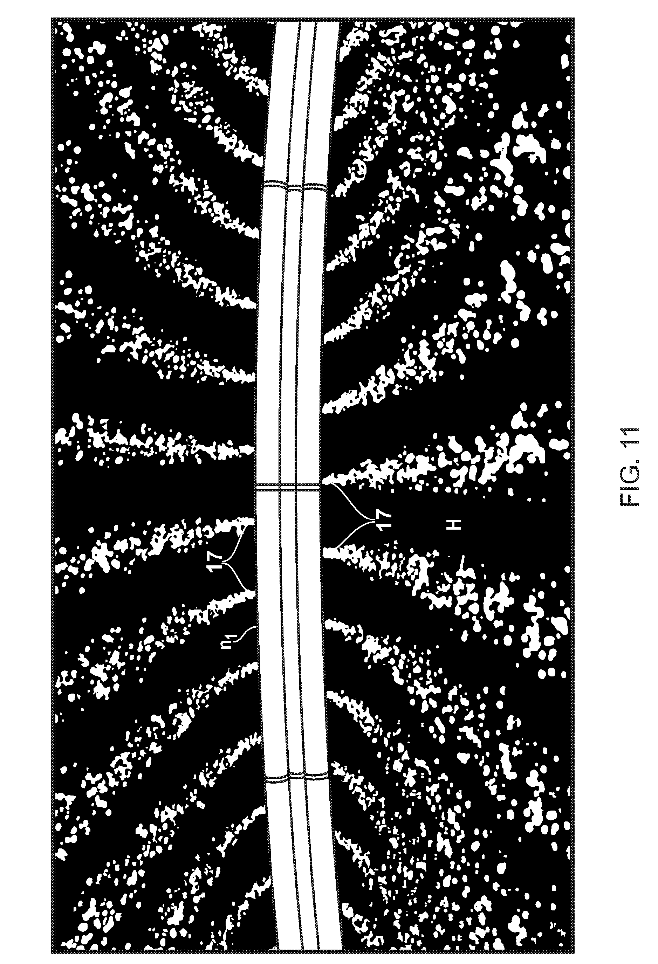

Figure 11 is a top view of the flexible conduit n₁-nₙ in Figure 10, where it can be seen that the nozzles 17 in one of the rows are configured offset a distance relative to the nozzles 17 in the other row, so as to provide a double and denser bubble curtain 19.

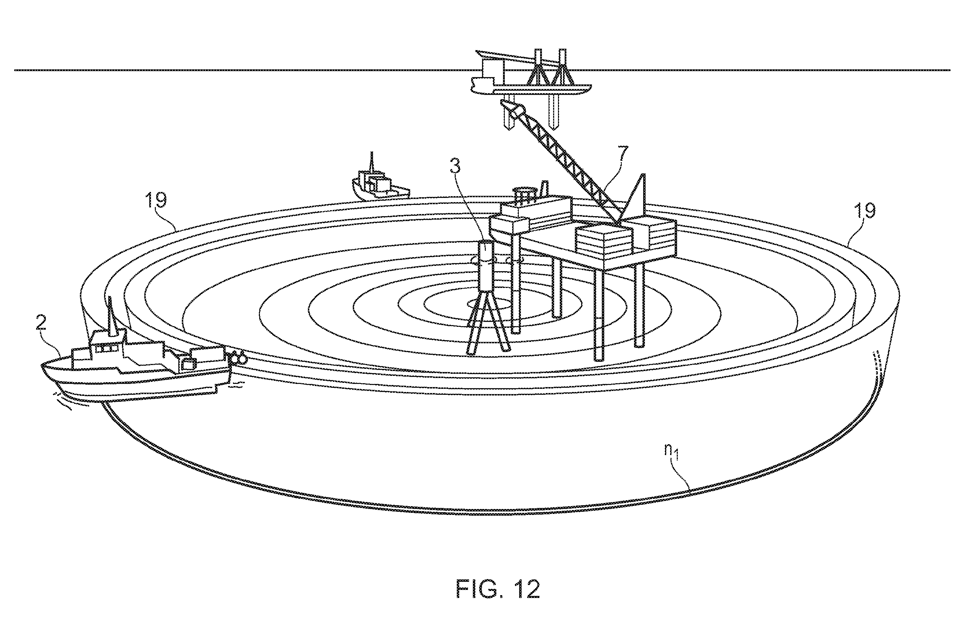

Figure 12 shows that an air bubble curtain 19 has been provided around the foundation 3 of an offshore structure. The underwater noise, shown here as expanding circles, that is generated by, for example, piling the foundation 3, will propagate radially outwards from the foundation 3, but will be stopped by the air bubble curtain 19.

When the foundation 3 is secured to the seabed H, the vessel 2 will move to the next laid-out flexible conduit n₂-nₙ to repeat the process of connection and preparation of the flexible conduit in order to provide an air bubble curtain 19 as explained above. In the meantime, the work vessel 7 will have positioned another foundation 3 on the seabed H within the circle that is formed by the flexible conduit n₂-nₙ, such that the underwater noise in connection with this work does not escape beyond the air bubble curtain 19.

The present invention has now been explained with reference to an exemplary embodiments, but a person of skill in the art will understand that changes and modifications to these embodiments could be made that are within the scope of the invention as defined in the following claims, for example, the method and the equipment for carrying of the method according to the present invention may also be used for shielding underwater noise that is generated by seismic surveys or to shield noise generated by different types of underwater blasting.

## Claims

1. A method for laying out flexible conduits and shielding underwater noise in a body of water, for example, underwater noise in connection with preparation and foundation work for a plurality of offshore structures, using flexible conduits (n₁-nₙ) provided with a plurality of nozzles (17) along their length, which flexible conduits (n₁-nₙ) are configured to be connected to one or more compressed air sources (9), **characterised in that** the method comprises the following steps:
- a) towing a plurality of flexible conduits (n₁-nₙ) in full length by means of a vessel (2) to the deployment site of the offshore structures:
- b) readying flexible conduits (n₂-nₙ) for later laying by ballasting and disconnecting the flexible conduits (n₂-nₙ) from the vessel (2) so as to lower the flexible conduits (n₂-nₙ) onto the seabed (H);
- c) towing a flexible conduit (n₁) and laying the flexible conduit (n₁) in a desired closed pattern around the deployment site of an offshore structure and simultaneously ballasting the flexible conduit (n₁) so as to lower the flexible conduit (n₁) onto the seabed (H).

2. A method according to claim 1, **characterised in that** the method further comprises the following steps:
- d) fetching another flexible conduit (n₂) by picking up a floating surface buoy (5) that is connected to the flexible conduit (n₂) and arranging the floating surface buoy (5) on the vessel (2);
- e) then repeating step c) for the flexible conduit (n₂); and
- f) then repeating steps d) and e) until the remaining flexible conduits (n₃-nₙ) have been laid on the deployment sites of each of the offshore structures.

3. A method according to claims 1 and 2, **characterised in that** the method further comprises the following steps:
- g) connecting the laid flexible conduit (n₁-nₙ) at the location in which the preparation and foundation work for an offshore structure is to take place to compressed air sources (9) on the vessel (2); and
- h) continuously supplying compressed air to the laid flexible conduit (n₁-nₙ) so as to provide a closed curtain of air (19) around the deployment site of the offshore structure.

4. A method according to claim 3, **characterised in that** the method further comprises the following step:
- i) adjusting the continuous supply of compressed air to the laid flexible conduit (nᵢ-nₙ) in relation to wind and current conditions.

5. Equipment that is used in carrying out the method according to at least one of preceding claims 1-4, comprising a flexible conduit (n₁-nₙ) that is configured with a plurality of nozzles (17) along its length and is further configured to be connected to one or more compressed air sources (9), which flexible conduit (n₁-nₙ) can with the aid of suitable means be ballasted and deballasted so as to be lowered down to a seabed (H) and raised therefrom, **characterised in that** the flexible conduit (n₁-nₙ) comprises five chambers, two of which forming variable ballast chambers (12), two of which forming air-conducting chambers (13) and one forming a fixed ballast chamber (14), which five chambers (12, 13, 14) extend in the length of the flexible conduit (n₁-nₙ).

6. Equipment according to claim 5, **characterised in that** the five chambers (12, 13, 14) of the flexible conduit (n₁-nₙ) are connected to each other through intermediate elements (15), forming a "closed" unit, which intermediate elements (15) extend the entire length of the flexible conduit (n₁-nₙ).

7. Equipment according to claim 6, **characterised in that** the fixed ballast chamber (14) is configured with a through opening in the entire length of the fixed ballast chamber (14).

8. Equipment according to claim 7, **characterised in that** a weight in the form of chain (16) is arranged in the through opening, running the entire length of the fixed ballast chamber (14).

9. Equipment according to claim 5 or 6, **characterised in that** each of the two air-conducting chambers (13) is configured with a plurality of nozzles (17) in the proximity of their lower end, which nozzles (17) extend in the longitudinal direction of the flexible conduit (n₁-nₙ).

10. Equipment according to claim 9, **characterised in that** the nozzles (17) are configured in two rows, each row being arranged on its respective side of the lowermost point of the flexible conduit (n₁-nₙ).

11. Equipment according to claim 9 or 10, **characterised in that** the nozzles (17) in one row in the longitudinal direction of the flexible conduit (n₁-nₙ) are offset in relation to the nozzles (17) in the other row in the longitudinal direction of the flexible conduit (n₁-nₙ).

## Patentansprüche

1. Verfahren zum Auslegen flexibler Leitungen und zum Abschirmen von Unterwasserlärm in einem Gewässerkörper, zum Beispiel Unterwasserlärm in Verbindung mit Vorbereitungs- und Fundamentarbeit für mehrere Offshore-Bauwerke, unter Verwendung flexibler Leitungen (n₁ - nₙ), die mit mehreren Düsen (17) entlang ihrer Länge versehen sind, welche flexiblen Leitungen (n₁ - nₙ) dazu ausgebildet sind, an eine oder mehrere Druckluftquellen (9) angeschlossen zu werden, **dadurch gekennzeichnet, dass** das Verfahren die folgenden Schritte umfasst.
- a) Ziehen mehrerer flexibler Leitungen (n₁ - nn) in voller Länge mittels eines Schiffs (2) zum Einsatzort der Offshore-Bauwerke;
- b) Bereitmachen flexibler Leitungen (n₂ - nₙ) für späteres Verlegen, indem die flexiblen Leitungen (n₂ - nₙ) mit Ballast beladen und vom Schiff (2) getrennt werden, um die flexiblen Leitungen (n₂ - nₙ) auf den Meeresboden (H) abzusenken;
- c) Ziehen einer flexiblen Leitung (n₁) und Verlegen der flexiblen Leitung (n₁) in einem gewünschten geschlossenen Muster um den Einsatzort eines Offshore-Bauwerks, und gleichzeitiges Beladen der flexiblen Leitung (n₁) mit Ballast, um die flexible Leitung (n₁) auf den Meeresboden (H) abzusenken.

2. Verfahren nach Anspruch 1, **dadurch gekennzeichnet, dass** das Verfahren darüber hinaus die folgenden Schritte umfasst:
- d) Einholen einer anderen flexiblen Leitung (n₂), indem eine an der Oberfläche schwimmende Boje (5) aufgenommen wird, die mit der flexiblen Leitung (n₂) verbunden ist, und Anordnen der an der Oberfläche schwimmenden Boje (5) am Schiff (2);
- e) dann Wiederholen des Schritts c) für die flexible Leitung (n₂); und
- f) dann Wiederholen der Schritte d) und e), bis die übrigen flexiblen Leitungen (n₃ - nₙ) an den Einsatzorten jedes der Offshore-Bauwerke verlegt wurden.

3. Verfahren nach den Ansprüchen 1 und 2, **dadurch gekennzeichnet, dass** das Verfahren darüber hinaus die folgenden Schritte umfasst:
- g) Anschließen der verlegten flexiblen Leitung (n₁ - nₙ) an der Stelle, an der die Vorbereitungs- und Fundamentarbeit für ein Offshore-Bauwerk stattfinden soll, an Druckluftquellen (9) auf dem Schiff (2); und
- h) kontinuierliches Zuführen von Druckluft zur verlegten flexiblen Leitung (n₁ - nₙ), um einen geschlossenen Luftschleier (19) um den Einsatzort des Offshore-Bauwerks bereitzustellen.

4. Verfahren nach Anspruch 3, **dadurch gekennzeichnet, dass** das Verfahren darüber hinaus den folgenden Schritt umfasst:
- i) Anpassen der kontinuierlichen Zufuhr von Druckluft zur verlegten flexiblen Leitung (n₁ - nₙ) im Verhältnis zu Wind- und Strömungsbedingungen.

5. Ausrüstung, die zum Ausführen des Verfahrens nach mindestens einem der vorhergehenden Ansprüche 1 bis 4 verwendet wird, eine flexible Leitung (n₁ - nₙ) umfassend, die mit mehreren Düsen (17) entlang ihrer Länge ausgebildet ist und darüber hinaus dazu ausgebildet ist, an eine oder mehrere Druckluftquellen (9) angeschlossen zu werden, welche flexible Leitung (n₁ - nₙ) mit Hilfe geeigneter Einrichtungen mit Ballast beladen und von Ballast befreit werden kann, um auf einen Meeresboden (H) abgesenkt und davon angehoben zu werden, **dadurch gekennzeichnet, dass** die flexible Leitung (n₁ - nₙ) fünf Kammern umfasst, wovon zwei variable Ballastkammern (12) bilden, wovon zwei luftführende Kammern (13) bilden, und eine eine feststehende Ballastkammer (14) bildet, welche fünf Kammern (12, 13, 14) sich in der Länge der flexiblen Leitung (n₁ - nₙ) erstrecken.

6. Ausrüstung nach Anspruch 5, **dadurch gekennzeichnet, dass** die fünf Kammern (12, 13, 14) der flexiblen Leitung (n₁ - nₙ) durch Zwischenelemente (15) miteinander verbunden sind, wodurch eine "geschlossenen" Einheit gebildet wird, welche Zwischenelemente (15) sich über die gesamte Länge der flexiblen Leitung (n₁ - nₙ) erstrecken.

7. Ausrüstung nach Anspruch 6, **dadurch gekennzeichnet, dass** die feststehende Ballastkammer (14) mit einer Durchgangsöffnung in der gesamten Länge der feststehenden Ballastkammer (14) ausgebildet ist.

8. Ausrüstung nach Anspruch 7, **dadurch gekennzeichnet, dass** ein Gewicht in der Form einer über die gesamte Länge der feststehenden Ballastkammer (14) verlaufenden Kette (16) in der Durchgangsöffnung angeordnet ist.

9. Ausrüstung nach Anspruch 5 oder 6, **dadurch gekennzeichnet, dass** jede der zwei luftführenden Kammern (13) mit mehreren Düsen (17) im Nahbereich ihres unteren Endes ausgebildet ist, welche Düsen (17) sich in der Längsrichtung der flexiblen Leitung (n₁ - nₙ) erstrecken.

10. Ausrüstung nach Anspruch 9, **dadurch gekennzeichnet, dass** die Düsen (17) in zwei Reihen ausgebildet sind, wobei jede Reihe auf ihrer jeweiligen Seite des untersten Punkts der flexiblen Leitung (n₁ - nₙ) angeordnet ist.

11. Ausrüstung nach Anspruch 9 oder 10, **dadurch gekennzeichnet, dass** die Düsen (17) in einer Reihe in der Längsrichtung der flexiblen Leitung (n₁ - nₙ) in Bezug auf die Düsen (17) in der anderen Reihe in der Längsrichtung der flexiblen Leitung (n₁-nₙ) versetzt sind.

## Revendications

1. Procédé pour la pose de conduits flexibles et la protection contre un bruit sous-marin dans une masse d'eau, par exemple, un bruit sous-marin dans le cadre d'un travail de préparation et de fondation pour une pluralité de structures offshores, en utilisant des conduits flexibles (n₁-nₙ) munis d'une pluralité de buses (17) le long de leur longueur, lesquels conduits flexibles (n₁-nₙ) sont configurés pour être raccordés à une ou plusieurs sources d'air comprimé (9), **caractérisé en ce que** le procédé comprend les étapes suivantes consistant à :
a) tracter une pluralité de conduits flexibles (n₁-nₙ) en pleine longueur au moyen d'un navire (2) jusqu'au site de déploiement des structures offshores ;
b) tenir les conduits flexibles (n₂-nₙ) prêts pour la pose ultérieure en lestant et en déconnectant les conduits flexibles (n₂-nₙ) du navire (2) afin d'abaisser les conduits flexibles (n₂-nₙ) sur le fond marin (H) ;
c) tracter un conduit flexible (n₁) et poser le conduit flexible (n₁) selon un motif fermé souhaité autour du site de déploiement d'une structure offshore, et lester simultanément le conduit flexible (n₁) afin d'abaisser le conduit flexible (n₁) sur le fond marin (H).

2. Procédé selon la revendication 1, **caractérisé en ce que** le procédé comprend en outre les étapes suivantes consistant à :
d) aller chercher un autre conduit flexible (n₂) en prenant une bouée de surface flottante (5) qui est raccordée au conduit flexible (n₂) et agencer la bouée de surface flottante (5) sur le navire (2) ;
e) répéter ensuite l'étape c) pour le conduit flexible (n₂) ; et
f) répéter ensuite les étapes d) et e) jusqu'à ce que les conduits flexibles (n₃-nₙ) restants aient été posés sur les sites de déploiement de chacune des structures offshores.

3. Procédé selon les revendications 1 et 2, **caractérisé en ce que** le procédé comprend en outre les étapes suivantes consistant à :
g) raccorder le conduit flexible (n₁-nₙ) posé à l'emplacement dans lequel le travail de préparation et de fondation pour une structure offshore doit avoir lieu, aux sources d'air comprimé (9) sur le navire (2) ; et
h) fournir de manière continue l'air comprimé au conduit flexible (n₁-nₙ) posé afin de fournir un rideau d'air fermé (19) autour du site de déploiement de la structure offshore.

4. Procédé selon la revendication 3, **caractérisé en ce que** le procédé comprend en outre l'étape suivante consistant à :
i) ajuster la fourniture continue d'air comprimé au conduit flexible (n₁-nₙ) posé en fonction des conditions de vent et de courant.

5. Equipement qui est utilisé pour mettre en oeuvre le procédé selon au moins l'une des revendications 1 à 4, comprenant un conduit flexible (n₁-nₙ) qui est configuré avec une pluralité de buses (17) le long de sa longueur et est en outre configuré pour être raccordé à une ou plusieurs des sources d'air comprimé (9), lequel conduit flexible (n₁-nₙ) peut, à l'aide de moyens appropriés, être lesté et délesté afin d'être abaissé sur un fond marin (H) et levé de ce dernier, **caractérisé en ce que** le conduit flexible (n₁-nₙ) comprend cinq chambres, parmi lesquelles deux forment des chambres de ballast variable (12), deux forment des chambres de conduction d'air (13) et une forme une chambre de ballast fixe (14), lesquelles cinq chambres (12, 13, 14) s'étendent sur la longueur du conduit flexible (n₁-nₙ).

6. Equipement selon la revendication 5, **caractérisé en ce que** les cinq chambres (12, 13, 14) du conduit flexible (n₁-nₙ) sont raccordées entre elles par des éléments intermédiaires (15), formant une unité « fermée », lesquels éléments intermédiaires (15) s'étendent sur toute la longueur du conduit flexible (n₁-nₙ).

7. Equipement selon la revendication 6, **caractérisé en ce que** la chambre de ballast fixe (14) est configurée par une ouverture débouchante sur toute la longueur de la chambre de ballast fixe (14).

8. Equipement selon la revendication 7, **caractérisé en ce qu'**un poids se présentant sous forme de chaîne (16), est agencé dans l'ouverture débouchante, s'étendant sur toute la longueur de la chambre de ballast fixe (14).

9. Equipement selon la revendication 5 ou 6, **caractérisé en ce que** chacune des deux chambres de conduction d'air (13) est configurée avec une pluralité de buses (17) à proximité de leur extrémité inférieure, lesquelles buses (17) s'étendent dans la direction longitudinale du conduit flexible (n₁-nₙ).

10. Equipement selon la revendication 9, **caractérisé en ce que** les buses (17) sont configurées en deux rangées, chaque rangée étant agencée sur son côté respectif du point le plus bas du conduit flexible (n₁-nₙ).

11. Equipement selon la revendication 9 ou 10, **caractérisé en ce que** les buses (17) dans une rangée dans la direction longitudinale du conduit flexible (n₁-nₙ) sont décalées par rapport aux buses (17) dans l'autre rangée dans la direction longitudinale du conduit flexible (n₁-nₙ).
